**Europäisches Patentamt**

**European Patent Office**

**Office européen des brevets**

(19)

(11) Veröffentlichungsnummer : **0 057 943**

**B1**

(12) **EUROPÄISCHE PATENTSCHRIFT**

(45) Veröffentlichungstag der Patentschrift :
28.05.86

(21) Anmeldenummer : 82101004.8

(22) Anmeldetag : 11.02.82

(51) Int. Cl.⁴ : **B 28 B 23/00**

(54) **Verfahren zur Herstellung einer als Wärmeaustauschelement dienenden Hohlplatte aus Beton.**

(30) Priorität : 11.02.81 DE 3104812

(43) Veröffentlichungstag der Anmeldung :
18.08.82 Patentblatt 82/33

(45) Bekanntmachung des Hinweises auf die Patenterteilung : 28.05.86 Patentblatt 86/22

(84) Benannte Vertragsstaaten :
**AT BE CH DE FR GB IT LI LU NL SE**

(56) Entgegenhaltungen :
**CH-A- 357 667**
**DE-B- 1 014 018**
**GB-A- 2 040 435**
**US-A- 3 570 206**

(73) Patentinhaber : **Mischke, Arnold**
**Lindenweg 7**
**D-3257 Springe 4 (Völksen) (DE)**

(72) Erfinder : **Mischke, Arnold**
**Lindenweg 7**
**D-3257 Springe 4 (Völksen) (DE)**

(74) Vertreter : **Johannesson, Benno, Dr.-Ing.**
**Münder Heerstrasse 4**
**D-3015 Wennigsen / Deister (DE)**

Jouve, 18, rue St-Denis, 75001 Paris, France

## Beschreibung

Aus Beton hergestellte Hohlplatten dienen als positive oder negative Wärmeaustauschelemente, indem das sie durchfließende Wärmeaustauschmedium, insbesondere Wasser, entweder von der Sonnenwärme erwärmt oder von dem zu heizenden Raum abgekühlt wird. Derartige Hohlplatten können erheblicher mechanischer Belastung ausgesetzt sein, insbesondere dann, wenn sie als Fußbodenbelag verwendet werden. Um dieser Belastung gewachsen zu sein, werden zweckmäßig zwischen Boden- und Deckschicht der Hohlplatte Betonabstandsstücke vorgesehen. Durch diese Ausrüstung der Hohlplatten wird aber ihre Herstellung erheblich erschwert. Als mögliches Verfahren ist hierzu in der DE-PS-29 24 305 erwähnt, daß bei der Herstellung der Betonhohlplatte der Innenraum zunächst durch einen entsprechend geformten Wachskörper ausgefüllt ist, der nach der Ummantelung mit Beton wieder herausgeschmolzen wird.

Dieses Verfahren ist aber umständlich. Auch können nach dem Ausschmelzen Wachsreste im Hohlraum verbleiben.

Ein anderes bekanntes Herstellungsverfahren von Hohlplatten (brit. Patentanmeldung 2 040 435) verwendet zur Bildung des Hohlraumes zwei aufeinandergelegte thermoplastische Folien, die an den Rändern miteinander verschweißt sind und zur Erzeugung von parallelen rohrförmigen Hohlräumen — ebenfalls an ihren Rändern verschweißte — rechteckige Aussparungen aufweisen. Nach der Ummantelung der Folien mit Beton wird dieses Foliengebilde durch eingepreßte Luft aufgeblasen, so daß sich ein durch die Schweißnähte begrenzter Hohlraum bildet, und zwar noch vor dem Abbinden des Betons. Dieses Verfahren kann nur zu rohrförmig ausgestalteten Hohlräumen mit Rohrquerschnitten führen, die sich — nach Maßgabe des angewendeten Luftdrucks — von der Linsenform mit senkrecht zur Platte stehender Achse über die Kreisform zur Linsenform mit waagerecht zur Platte stehender Achse verändern lassen. Für den Wärmeaustausch dienende Hohlplatten sind aber Hohlräume mit rechteckähnlichem Querschnitt erwünscht, derart daß der Wärmeaustausch zwischen Hohlraum und Umgebung durch eine gleichmäßig dicke Betonschicht erfolgt. Ein weiterer Nachteil dieses bekannten Herstellungsverfahrens besteht darin, daß die Hohlräume beim Aufblasen nur dann über die Gesamtausdehnung der Platte gleichförmig ausgebildet werden, wenn die Folien in ihrer gesamten Ausdehnung gleiche Elastizität aufweisen und der die Folien umgebende Beton während des Aufblasens in allen Teilen der Platte gleichen Widerstand leistet. Wenn nach dem Abbinden des Betons der Luftdruck im Hohlraum der fertiggestellten Platte aufgehoben ist, kann bei ungenügender Haftung zwischen Folie und Beton das zusammenfallende Foliengebilde dem die Platte durchflutenden Medium Widerstand entgegensetzen.

Der Erfindung liegt die Aufgabe zugrunde, ein leicht durchführbares Verfahren zur Herstellung von Wärmeaustauschplatten zu schaffen, das die erwähnten Nachteile der bekannten Verfahren vermeidet.

Erfindungsgemäß wird diese Aufgabe durch das im Patentanspruch 1 beschriebene Verfahren gelöst.

Besonders vorteilhaft wird im Rahmen dieses Verfahrens Metallgaze für die Herstellung der beiden den Innenraum der Hohlplatte auskleidenden Schalen verwendet. Werden solche aus Metallgaze bestehenden Schalen in zusammengefügtem Zustand in flüssigen Kunstharz getaucht, so entsteht ein fester Innenkörper, der bequem mit Betonmasse ummantelt werden kann. Das überraschende des Verfahrens besteht darin, daß die zusammengefügten Innenschalen so ausgebildet sind, daß sie es zulassen, daß sich die Betonabstandsstücke zwischen Boden- und Deckfläche der Hohlplatte ausbilden können. Dieses Ziel könnte nicht einfach dadurch erreicht werden, daß in die Böden der beiden inneren Schalen Zylinder eingebaut werden, die den Abstandsstücken entsprechen: Die Zylinderöffnungen der beiden Schalen würden sich beim Aufeinanderlegen der Schalen nicht so genau zur Deckung bringen lassen, daß ein Zwischenraum vermieden werden könnte, durch den die Betonmasse sich während des Einfüllens in den Hohlraum ergießen würde. Diese Gefahr ist beim erfindungsgemäßen Verfahren dadurch gebannt, daß die Abstandsstücke gemäß Punkt 1. des Anspruchs 1 hergestellt werden.

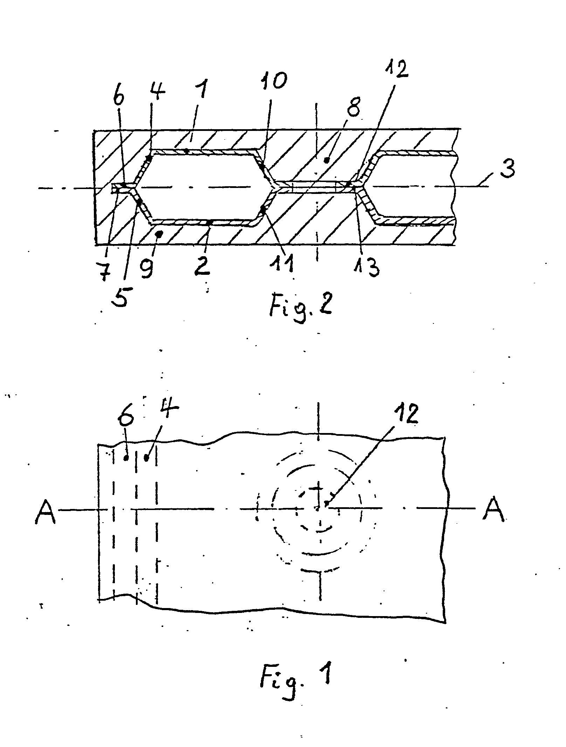

Die Fig. 1 und 2 zeigen einen Ausschnitt des Hohlplattenrandes in Draufsicht und den Schnitt A-A. Die Herstellung dieser Hohlplatte 9 erfolgt in folgender Weise: Zunächst werden die Schalen 1 und 2 hergestellt und zwar zweckmäßig aus Metallgaze, z. B. Stahldrahtgaze. Nachdem die beiden Schalen mit einander zugewandten Öffnungen zusammengelegt sind, werden sie in flüssigen Kunstharz getaucht. Dadurch entsteht ein Gebilde, das genügende Festigkeit für die weitere Verarbeitung aufweist. Dann werden die miteinander verbundenen Schalen in eine in den Figuren nicht dargestellte Betongußform eingebracht und darin so befestigt, daß der zwischen Gußform und den zusammengefügten Schalen verbleibende Raum mit zähflüssiger Betonmasse derart ausgefüllt werden kann, daß die Hohlplatte entsteht. Zur Vollendung der Betonabstandsstücke 8 dringt die Betonmasse in die Aussparungen der Schalen ein.

Mit dem erfindungsgemäßen Verfahren lassen sich auch Führungsrippen im Hohlraum der Betonplatte, wie sie zur Beeinflussung der Strömung des Wärmeaustauschmediums im Hohlraum der Platte angewendet werden, herstellen, wie das in den Ansprüchen 5 und 6 beschrieben ist.

Nach oder während des Einfüllens der zunächst zähflüssigen Betonmasse in die Gußform kann eine Verdichtung des Betons dadurch erreicht werden, daß die Betongußform einem Schüttelvorgang unterworfen wird.

Die Zuführ- und Abführstutzen lassen sich ohne Schwierigkeiten in entsprechende Aussparungen der Schalenränder 6, 7 einbetten. Die Stutzen können zum Halten der Schalen während des Einbetonierens der Schalen benutzt werden.

**Patentansprüche**

1. Verfahren zum Herstellen einer aus Beton oder einem gleichartigen Werkstoff bestehenden, als Wärmeaustauschelement dienenden Hohlplatte (9), deren Hohlraum von eine Boden- und eine Deckschicht miteinander verbindenden Betonabstandsstücken (8) durchsetzt ist, und die mit Stutzen zum Zu- und Abführen des Wärmeaustauschmediums versehen ist, gekennzeichnet durch folgende Verfahrensschritte :

a. es werden aus tiefziehbarer Folie zwei Schalen (1, 2) hergestellt, deren Öffnungen der inneren Begrenzung der Hohlplattenwandung entsprechen, deren Seitenwandungen (4, 5) in die Mittelebene (3) nach außen zu Flanschen (6, 7) abgebogen sind und die zur Bildung der Abstandsstücke (8) der Hohlplatte (9) mit aus dem Schalenboden herausgetriebenen Ausformungen (10, 11) versehen sind, deren Bodenfläche (12, 13) in der Mittelebene (3) liegt und eine Aussparung für das entsprechende Abstandsstück (8) aufweist.

b. die beiden Schalen (1, 2) werden mit ihren einander zugewandten Öffnungen aufeinandergelegt und in eine Betongußform, die vorzugsweise bereits zum Teil mit Betongußmasse gefüllt ist, eingebracht und derart gehalten, daß der Abstand des unteren Schalenbodens vom Boden der Gußform der Stärke des Bodens der Hohlplatte und der Abstand der Schalenwandungen von der Wandung der Gußform der Stärke der Wandung der Hohlplatte entsprechen.

c. in die Betongußform wird Beton in solcher Menge eingebracht, daß die Betonoberfläche die Deckfläche der Hohlplatte (9) bildet.

2. Verfahren nach Anspruch 1, dadurch gekennzeichnet, daß die Schalen (1, 2) aus Metallgaze hergestellt sind.

3. Verfahren nach Anspruch 2, dadurch gekennzeichnet, daß die Schalen (1, 2) nach ihrem Zusammensetzen in flüssiges Kunstharz eingetaucht werden.

4. Verfahren nach Anspruch 1, dadurch gekennzeichnet, daß die Betongußform nach dem Einbringen des zähflüssigen Betons einem Rüttelvorgang unterworfen wird.

5. Verfahren nach Anspruch 1, dadurch gekennzeichnet, daß zur Bildung von Führungsrippen die Schalen (1, 2) mit aus dem Schalenboden herausgetriebenen rippenförmigen Ausformungen versehen werden.

6. Verfahren nach Anspruch 5, dadurch gekennzeichnet, daß die rippenförmigen Ausformungen Aussparungen aufweisen.

**Claims**

1. A method for producing a hollow plate (9), made of concrete or a similar material, serving as a heat exchanger element, across the hollow space of which extend concrete spacer members (8) which connect together a bottom and a top layer, and which has connections for supply and removal of the heat exchange medium, characterised by the following method steps :

a. from deep-drawing metal sheet two shells (1, 2) are produced, the recesses of which correspond with the inner confines of the hollow plate walls, the side walls (4, 5) of which are bent outwards in the median plane (3) to form flanges (6, 7), and which shells, for the purpose of forming the spacer members (8), have deformations (10, 11) from the bottom of the shells, the bottom surfaces (12, 13) of the deformations lying in the median plane (3) and have an aperture for the corresponding spacer member (8) ;

b. the two shells (1, 2) are laid one upon the other with their recesses facing each other and placed in a concrete mould, preferably already partly filled with concrete material, and held so that the spacing of the lower shell surface from the base of the mould corresponds to the thickness of the base of the hollow plate, and the spacing of the shell walls from the walls of the mould corresponds to the thickness of the edge wall of the hollow plate ;

c. concrete is put into the mould in such a quantity that the upper surface of the concrete forms the top surface of the hollow plate (9).

2. A method according to Claim 1, characterised in that the shells (1, 2) are made from metal mesh.

3. A method according to Claim 2, characterised in that the shells (1, 2) after being put together are dipped in liquid synthetic resin.

4. A method according to Claim 1, characterised in that the concrete mould is subjected to a shaking process after the insertion of the viscous concrete material.

5. A method according to Claim 1, characterised in that the order to form guide ribs the shells (1, 2) are provided with rib-like deformations which are forced out of the bottom of the shells.

6. A method according to Claim 5, characterised in that the rib-like deformations have apertures.

**Revendications**

1. Procédé pour la fabrication, en béton ou un matériau analogue, d'une plaque creuse (9) servant d'élément échangeur de chaleur, dont la cavité est traversée par des entretoises en béton (8) reliant la couche de fond et la couche de recouvrement de la plaque l'une à l'autre, et qui est pourvue de tubulures pour l'amenée et l'évacuation du fluide d'échange thermique, caractérisé par les phases suivantes :

a. on produit d'une feuille emboutissable deux coquilles (1, 2) dont les ouvertures correspondent à la limite intérieure de la paroi de la plaque creuse, dont les parois latérales (4, 5) sont recourbées vers l'extérieur dans le plan médian (3) pour former des rebords (6, 7) et qui, pour la formation des entretoises (8) de la plaque creuse (9), sont pourvues de portions (10, 11) refoulées hors du fond des coquilles, portions dont la surface de fond (12, 13) est située dans le plan médian (3) et présente un évidement pour l'entretoise (8) correspondante ;

b. on place les deux coquilles (1, 2) avec les ouvertures l'une contre l'autre, on les introduit dans un moule pour béton, qui est de préférence déjà rempli partiellement de béton, et on les y maintient de manière que la distance entre le fond de coquille du bas et le fond du moule corresponde à l'épaisseur du fond de la plaque creuse et que la distance entre les parois des coquilles et la paroi du moule corresponde à l'épaisseur de la paroi de la plaque creuse ; et

c. on introduit une telle quantité de béton dans le moule que la surface du béton forme la surface de recouvrement de la plaque creuse (9).

2. Procédé selon la revendication 1, caractérisé en ce que les coquilles (1, 2) sont réalisées en gaze métallique.

3. Procédé selon la revendication 2, caractérisé en ce que les coquilles (1, 2) sont plongées dans une résine synthétique liquide après leur assemblage.

4. Procédé selon la revendication 1, caractérisé en ce que le moule pour béton est soumis à un processus de vibration après l'introduction du béton semi-liquide.

5. Procédé selon la revendication 1, caractérisé en ce que les coquilles (1, 2) sont pourvues de portions refoulées hors du fond des coquilles ayant la forme de nervures, en vue de la formation de nervures de guidage.

6. Procédé selon la revendication 5, caractérisé en ce que les portions réalisées par refoulement et ayant la forme de nervures présentent des évidements.

Fig. 2

Fig. 1